# EUROPÄISCHE PATENTSCHRIFT

(11) **EP 1 046 949 B1**
(45) Veröffentlichungstag und Bekanntmachung des Hinweises auf die Patenterteilung: **12.01.2005**
(21) Anmeldenummer: 00107804.7
(22) Anmeldetag: 12.04.2000
(51) Int. Cl.: G03B 37/04

(54) **Projektionssystem mit gekrümmten Projektionswänden unter Verwendung einer Polarisationseinrichtung**
Projection system with curved projection walls using a polarising device
Système de projection avec parois de projection courbes utilisant un dispositif polariseur

(30) Priorität: 17.04.1999 DE 19917453
(43) Veröffentlichungstag der Anmeldung: 25.10.2000
(73) Patentinhaber: EADS Deutschland GmbH, 81663 München (DE)
(72) Erfinder: Dr. Fligge, Ulrich, 82041 Deisenhofen (DE)

(56) Entgegenhaltungen:
- US-A- 5 175 575
- US-A- 5 376 980
- US-A- 5 625 489

## Beschreibung

Die Erfindung betrifft eine Simulationseinrichtung mit einer gekrümmten Projektionswand.

Bei der Projektion von Darstellungen an gekrümmte Projektionswände, insbesondere solche, die sich von deren Krümmungsmittelpunkt über einen Winkelbereich von mehr als 180° erstrecken, besteht das Problem, daß die Projektionsstrahlen und Reflexionen dieser Projektionsstrahlen auf Darstellungsbereiche der Projektionswand einwirken, die nicht zu den Darstellungsbereichen gehören, für die sie Darstellungen oder Abbildungen unmittelbar erzeugen sollen.

Aus Dokument US 5 376 980 ist eine Panorama-Projektionsvorrichtung mit einer gekrümmten Projektionswand bekannt.

Es ist daher eine Aufgabe der Erfindung, eine Einrichtung zu schaffen, die die Darstellung an gekrümmten Projektionswänden in bezug auf die Lichteigenschaften im Darstellungsbereich verbessert.

Die Erfindung wird im folgenden anhand der beigefügten Figuren beschrieben, die zeigen:
- Fig. 1: ein Anwendungsbeispiel der vorliegenden Erfindung und
- Fig. 2: eine schematische Darstellung der Erfindung in einem Simulationsraum mit einer Projektionswand, die sich über einen Winkelbereich von 360° erstreckt.

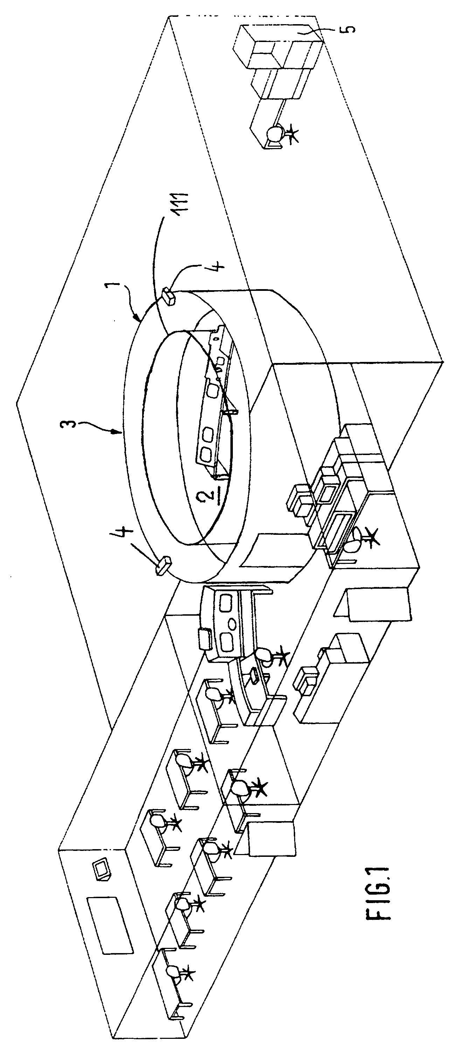

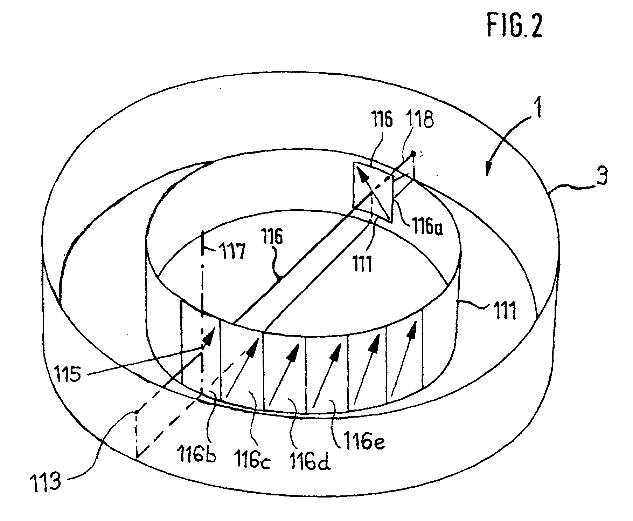

Fig. 1 zeigt eine Simulationsumgebung mit einem Simulationsraum 1, der von einer gekrümmten Simulationswand 3 umgrenzt ist. Im Inneren des Simulationsraums 1 befindet sich konzentrisch zur Simulationswand 3 eine gekrümmte Polarisationseinrichtung 111. Die Polarisationseinrichtung 111 bewirkt eine entlang ihres Umfangs gleichbleibende Ausrichtung eines Lichtstrahles, wie schematisch mit dem fiktiven Polarisationsbereichen 116a, 116b, 116c, 116d, 116e in Fig. 2 gezeigt werden soll. Die bewirkte Polarisationsrichtung ist konstant, wenn man von außerhalb der Polarisationseinrichtung auf diese Sicht und sich dabei entlang und in Umfangsrichtung desselben bewegt. Vorzugsweise beträgt die Polarisationsrichtung 45° zur Vertikalrichtung.

Fig. 2 zeigt die Projektionswand 3 von oben gesehen und einen Reflexionsstrahl 101, der durch die Reflexion eines von einem Projektor kommenden Projektionsstrahls (Bezugszeichen 4 in Fig. 1) an der Projektionswand 3 entsteht. Der Lichtstrahl, der von der Projektionswand 3 reflektiert wird, ist nicht dargestellt. Wie aus der Darstellung der Fig. 2 hervorgeht, erstreckt sich der Reflexionsstrahl 101 bis zur gegenüberliegenden Wand, so daß er mit einem oder mehreren Projektionsstrahlen anderer Projektoren zusammentrifft und den an dieser Stelle auftretenden Darstellungspunkt beeinflußt. Um dies zu verhindern, ist in dem von der Projektionswand 3 gebildeten Innenraum eine Polarisationseinrichtung 111 vorgesehen. Die Polarisationseinrichtung 111 erstreckt sich ebenfalls über einen Winkelbereich von 360°, wobei die Polarisationseinrichtung 111 entlang der Umfangslinie der Projektionswand 3 im gleichen Abstand zu dieser verläuft. Der Krümmungsmittelpunkt der Polarisationseinrichtung 111 liegt also im Krümmungsmittelpunkt der Projektionswand 3.

Bei jedem Durchtritt eines Reflexionsstrahls 101 bewirkt die Polarisationseinrichtung 111 entlang ihrer Umfangslinie einen Polarisationseffekt in derselben Richtung, vorzugsweise eine Polarisation von Licht ausgehend von der Vertikallinie um 45° in einem angenommenen Drehsinn zu dieser gedreht.

Der Effekt der Polarisationseinrichtung 111 wird im folgenden anhand der Fig. 2 beschrieben: der von einer Stelle 113 in der Projektionswand 3 kommende Reflexionsstrahl 10 1 trifft an einer Stelle 115 auf die Polarisationseinrichtung 111 auf und tritt durch diese hindurch. Im Bereich 116 nach dem Durchtritt durch die Polarisationseinrichtung 111 besitzen die Wellenformen des Reflexionsstrahls 101 eine Ausrichtung, die zur Vertikairichtung um 45° gedreht ist. Der Reflexionsstrahl 101 trifft dann von der Innenseite der Polarisationseinrichtung 111, d.h. von deren Krümmungsmittelpunkt her, auf eine Stelle 116 der Polarisationseinrichtung 111 auf, die diametral gegenüber der Stelle 115 liegt. Von dieser Seite her läßt die Polarisationseinrichtung 111 an der Stelle 116 nur noch Licht durch, das einen Amplitudenanteil in der Richtung aufweist, die gegenüber der Vertikallinie vom Krümmungsmittelpunkt her gesehen um 225° im selben angenommenen Drehsinn gedreht ist. Da aber der Reflexionsstrahl 101, der vom Krümmungsmittelpunkt auf die Stelle 116 auftritt, bereits um 180° gegenüber dem entsprechenden Teil 116a der Polarisationsrichtung 111 ausgerichtet ist, läßt die Stelle 116 keinen Anteil des Reflexionsstrahles 101 durch. Der Bereich 118, der vom Krümmungsmittelpunkt aus gesehen hinter der Stelle 116 der Polarisationseinrichtung 111 liegt, ist gestrichelt gezeichnet, um zu zeigen, daß in diesem Bereich der Reflexionsstrahl 101 bei Vorhandensein der Polarisationseinrichtung 111 nicht mehr auftritt. Der Reflexionsstrahl 101 gelangt also nicht von einer Stelle 113 der Projektionswand 3 zu einer dieser diametral gegenüber gelegenen Stelle 119 der Projektionswand 3. Dadurch wird eine Beeinflussung von Bildpunkten vermieden, die nicht zu dem Bildpunkt des Projektionsstrahles gehören, von dem der Reflexionsstrahl 101 stammt.

Die Polarisationseinrichtung 111 läßt es zu, daß sich Beobachter in den von der Polarisationseinrichtung 111 gebildeten Raum aufhalten können und von dort die von den Projektoren 4 erzeugten Bilder an der Projektionswand 3 ohne Beeinträchtigung durch die Polarisationseinrichtung 111 sehen können, während gleichzeitig durch die Verringerung der Fremdbeeinflussung von Projektionspunkten durch Reflexionsstrahlen eine Verbesserung der Darstellung bewirkt wird.

Der Winkelbereich der Projektionswand 3 kann je nach Anwendungsfall auch geringer als 360° sein, liegt jedoch vorzugsweise in einem Bereich größer als 180°. Vorzugsweise beschränkt sich die Polarisationseinrichtung im Wesentlichen 111 über denselben Winkelbereich als die Projektionswand 3.

## Patentansprüche

1. Simulationseinrichtung mit einem Projektionssystem und einer gekrümmten Projektionswand, die ein Segment mit einem Öffnungs-winkel von mindestens 180° bildet, **dadurch gekennzeichnet, daß** das Projektionssystem eine Polarisationseinrichtung (111) umfaßt, bei der die Polarisationsrichtung um 45° gegenüber der gemeinsamen Krümmungsachse von Polarisationsvorrichtung und Projektionswand geneigt ist, und bei der der Windungssinn der Polarisationsrichtung für alle Flächenelemente der Polarisationseinrichtung die gleiche ist, um die Reflexion eines Projektionssignals von einer Stelle der Projektionswand (113) auf den diametral gegenüberliegenden Bereich der Projektionswand zu unterdrücken.

## Claims

1. Simulation device having a projection system and a curved projection wall that forms a segment with an opening angle of at least 180°, **characterised in that** the projection system comprises a polarization device (111) in which the direction of polarization is inclined by 45° in relation to the common axis of curvature of the polarization arrangement and projection wall and in which the winding sense of the direction of polarization is the same for all surface elements of the polarization device in order to suppress the reflection of a projection signal from one point of the projection wall (113) onto the diametrically opposite region of the projection wall.

## Revendications

1. Dispositif de simulation avec un système de projection et une paroi de projection courbe, qui forme un segment avec un angle d'ouverture de 180° au moins, **caractérisé en ce que** le système de projection comporte un dispositif de polarisation (111), dans lequel la direction de polarisation est inclinée de 45° par rapport à l'axe de courbure commun du dispositif de polarisation et de la paroi de projection, et dans lequel le sens de rotation de la direction de polarisation est le même pour tous les éléments de surface du dispositif de polarisation, en vue de supprimer la réflexion d'un signal de projection à partir d'un point de la paroi de projection (113) sur la zone diamétralement opposée de la paroi de projection.
